# DEMANDE DE BREVET EUROPEEN

(11) **EP 1 050 839 A1**
(43) Date de publication de la demande: **08.11.2000**
(21) Numéro de dépôt: 00201623.6
(22) Date de dépôt: 04.05.2000
(51) Int. Cl.: G06K 7/00

(54) **Contrôle de la puissance rayonnée d'un lecteur de carte à circuit intégré de proximité**

(30) Priorité: 04.05.1999 FR 9905644
(71) Demandeur: CS Systemes d'Informations, 75013 Paris (FR)
(72) Inventeur: Mutzig, Jean-Paul, 91700 Sainte Genevieve des bois (FR); Serbanescu, Dan, 93130 Noisy-le-Sec (FR)
(74) Mandataire: Cabinet Hirsch

(57) **Abrégé**

L'invention propose un lecteur de carte sans contact, présentant une antenne adaptée (26), une chaîne d'émission (25) envoyant un signal oscillant vers l'antenne, des moyens (27) de mesure de la désadaptation de l'antenne, et des moyens (28) de réglage de la puissance du signal envoyé par la chaîne d'émission en fonction de la désadaptation mesurée.

Elle permet de contrôler la puissance rayonnée par le lecteur vers une carte, et de régler cette puissance en fonction de la puissance maximale admise par la carte. On peut avantageusement utiliser pour la mesure de la désadaptation de l'antenne un coupleur directionnel.

## Description

La présente invention concerne le domaine des lecteurs sans contact, et plus précisément des lecteurs sans contact pour cartes à circuit intégré.

Les cartes à circuit intégré, couramment désignées sous le qualificatif de cartes à puce sont d'un usage répandu. La plupart des modèles actuels fonctionnent dans des lecteurs munis de pattes de contact, qui s'appliquent à des plages de contact de la carte électriquement reliées au circuit intégré, suivant la norme ISO/IEC 7816.

Il a aussi été proposé des cartes à puce susceptibles d'être lues sans contact. De telles cartes présentent un circuit intégré et une bobine; le lecteur génère un champ oscillant, qui est couplé dans la bobine de la carte, et qui sert pour l'alimentation en puissance de la carte; une modulation du champ par le lecteur et par la carte permet l'échange de données entre le lecteur et la carte. Le document CD 14443-2 du comité ISO/IEC JTC1/SC17/WG8/TF2, Identification cards - Contactless integrated circuit(s) cards - Proximity cards, Part 2, Radio frequency power and signal interface décrit l'interface électrique entre un dispositif à couplage de proximité (PCD, acronyme de l'anglais Proximity Coupling Device) et une carte de proximité à circuit(s) intégré(s) (PICC, acronyme de l'anglais Proximity Integrated Circuit Card). Ce document précise que les valeurs minimale et maximale du champ de fonctionnement de la carte, qui sont de 1,5 et 7,5 A/m; la carte est supposée fonctionner de manière continue dans un champ d'intensité comprise entre ces deux valeurs. Ce document précise encore que le PCD doit générer un champ compris entre ces valeurs minimale et maximale, dans une zone définie par le fabricant du PCD.

Un des problèmes nouveaux rencontrés dans ce type de systèmes de lecture sans contact est qu'il est difficile de maintenir un champ entre ces valeurs minimale et maximale, dans une zone de lecture étendue. En effet, une modélisation grossière de propagation isotrope du champ montre que la puissance est une fonction inverse du cube de la distance à l'émetteur. Pour obtenir un champ d'une valeur minimale à une certaine distance du lecteur, il s'avère en pratique nécessaire d'émettre à des puissances importantes, de sorte que le champ à proximité du lecteur dépasse largement la puissance maximale autorisée. Inversement, si on impose un champ à la puissance maximale à proximité du lecteur, la zone dans laquelle le champ présente une valeur comprise entre les bornes minimale et maximale est très réduite.

Ce nouveau problème est d'autant plus gênant qu'une exposition d'un PICC à un champ d'une intensité trop élevée peut détruire le circuit intégré de la carte.

EP-A-0 722 094 propose un système de transmetteur / récepteur pour des cartes à circuit intégré sans contact. Le système comprend des moyens de détection de la distance entre l'interrogateur et la carte, et des moyens de contrôle de la puissance de sortie, pour contrôler la puissance de sortie de l'interrogateur en fonction des signaux détectés par les moyens de détection de distance. Ceci permet de maintenir le niveau de réception de la carte dans une plage acceptable; on peut ainsi éviter de munir la carte d'un circuit de protection contre les tensions excessives. Plus spécifiquement, l'estimation du couplage est obtenue par la mesure de la valeur absolue de la tension aux bornes du circuit résonant série de l'antenne du lecteur. Pour saisir le couplage il faut alimenter le circuit d'antenne par un générateur de courant. Si le couplage augmente, l'impédance du circuit accordé est plus grande et la tension aux bornes s'accroît. Si un certain seuil est atteint, une boucle de régulation se met en fonction et la puissance est diminuée. Les inconvénients du système proposé dans ce document sont dus au générateur de courant de radiofréquence :
- le déport d'antenne, par câble coaxial, souvent imposé par l'application, n'est pas possible;
- la réalisation d'un générateur de courant de radiofréquence, qui assure aussi un bon filtrage d'harmoniques (et qui est souvent obligatoire pour la compatibilité électro-magnétique), est critique;
- le rendement énergétique du système est fortement pénalisé par l'attaque de l'antenne par un générateur de courant.

EP-A-0 568 067 propose un système de contrôle de charge avec un contrôle temporel ou de puissance dans l'impulsion d'interrogation. On augmente progressivement la puissance d'interrogation, par augmentation de la durée d'impulsion ou de l'amplitude d'impulsion, jusqu'à obtenir une réponse de la carte. Dans ce système, l'ordre de réduction de puissance est en fait donné par la carte, en cas de surcharge ; il est évident qu'un tel système n'est pas instantané, on laisse l'initiative à la carte et les échanges d'informations carte- lecteur nécessitent des modifications du protocole des transactions ; les transactions seront aussi rallongées.

Il existe par ailleurs des coupleurs directionnels. Ces coupleurs peuvent être utilisé, dans un contexte différent, pour mesurer la puissance réfléchie par une charge, ainsi que la puissance consommée dans une charge. Voir par exemple Reference Data for Engineers : Radio, Electronics, Computer and Communications, eigth edition, SAMS, page 12-25.

L'invention propose une solution à ce problème nouveau de la puissance rayonnée par un lecteur de carte à circuit intégré de proximité; elle permet un contrôle simple, efficace et immédiat de la puissance rayonnée. L'invention empêche ainsi la destruction accidentelle de cartes; elle assure aussi un fonctionnement des cartes dans une zone étendue autour du lecteur. L'invention est d'une mise en oeuvre simple, à un coût réduit.

Plus précisément, l'invention propose un lecteur de carte sans contact, présentant une antenne adaptée, une chaîne d'émission envoyant un signal oscillant vers l'antenne, des moyens de mesure de la désadaptation de l'antenne, et des moyens de réglage de la puissance du signal envoyé par la chaîne d'émission en fonction de la désadaptation mesurée.

Dans un mode de réalisation, les moyens de mesure mesurent la désadaptation moyenne de l'antenne.

De préférence, les moyens de mesure comprennent un coupleur directionnel.

Dans un mode de réalisation, les moyens de réglage règlent la puissance du signal de sorte à ce que la désadaptation de l'antenne reste inférieure à une valeur seuil.

Dans un autre mode de réalisation, le lecteur comprend en outre une chaîne de réception recevant un signal de l'antenne et détectant les variations instantanées du signal reçu.

Dans un autre mode de réalisation, le lecteur comprend un contrôleur, le contrôleur générant une alarme lorsque les moyens de mesure mesurent une désadaptation et que la chaîne de réception ne détecte pas de variations instantanées du signal reçu pendant une durée prédéterminée.

L'invention propose encore un procédé de réglage de la puissance rayonnée par un lecteur de carte sans contact, présentant une antenne adaptée, comprenant :
- la mesure de la désadaptation de l'antenne, et
- le réglage de la puissance rayonnée par l'antenne en fonction de la désadaptation mesurée.

De préférence, l'étape de mesure s'effectue à l'aide d'un coupleur directionnel; l'étape de réglage comprend avantageusement la diminution de la puissance rayonnée lorsque la désadaptation mesurée est supérieure à une valeur prédéterminée.

Dans un mode de réalisation, le procédé comprend une étape de génération d'une alarme lorsque la désadaptation mesurée est supérieure à une valeur prédéterminée et que le lecteur ne détecte pas de carte pendant une durée prédéterminée.

D'autres caractéristiques et avantages de l'invention apparaîtront à la lecture de la description qui suit de modes de réalisation de l'invention, donnée à titre d'exemple et en référence aux dessins annexés, dont les figures montrent :
- figure 1, une présentation schématique d'un système lecteur - carte sans contact;
- figure 2, une représentation schématique d'un lecteur selon l'invention;
- figure 3, une représentation schématique d'un autre lecteur selon l'invention;
- figure 4, un schéma de principe d'un coupleur directif utilisé dans le lecteur de la figure 3.

L'invention propose, pour régler le problème nouveau décrit ci-dessus, de réguler la puissance rayonnée par le lecteur en fonction de la présence d'une carte. Pour cela, elle propose de réguler la puissance rayonnée par le lecteur en fonction de la puissance réfléchie par la carte vers le lecteur, ou en d'autres termes en fonction de la désadaptation du circuit d'antenne du lecteur provoquée par la présence d'une carte.

L'invention repose sur le fait que si l'antenne du lecteur est adaptée, il est possible de mesurer non seulement les variations d'impédance de l'antenne provoquées par la modulation du signal radiofréquence par la carte, mais aussi les variations d'impédance provoquées par la présence d'une carte, ou plus précisément par le couplage inductif de l'antenne d'une carte avec l'antenne du lecteur.

Cette solution présente l'avantage de ne pas nécessiter d'intervention de la carte; seule la présence de la carte, et plus exactement de la bobine de la carte suffit pour assurer le fonctionnement de l'invention. L'adaptation de puissance de l'invention est donc immédiate, et n'implique pas la mise en oeuvre de communications avec la carte.

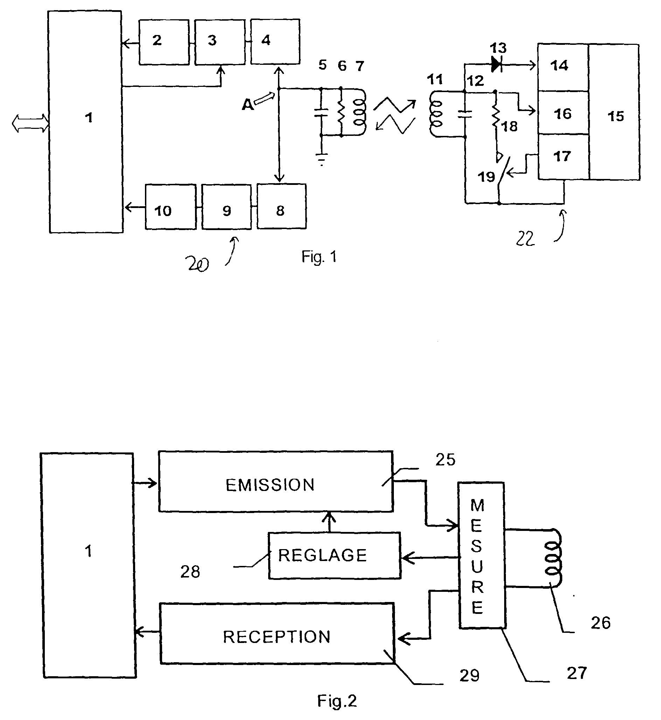

La figure 1 montre une présentation schématique d'un système lecteur - carte sans contact à laquelle l'invention peut s'appliquer. On a porté à la figure un lecteur 20 et une carte 22.

Le lecteur présente un élément de couplage formé dans l'exemple d'une bobine 7, aux bornes de laquelle est relié un circuit d'accord ou d'adaptation, formé d'un montage en parallèle d'un condensateur 5 et d'une résistance 6. Une des bornes de l'élément de couplage est à la masse, tandis que l'autre borne est reliée d'une part à la chaîne de réception, et d'autre part à la chaîne d'émission.

Le lecteur présente un microcontrôleur 1, gérant le lecteur. Ce microcontrôleur peut communiquer avec l'extérieur, comme symbolisé par la double flèche de la figure, pour recevoir des données à écrire sur la carte, ou transmettre des données lues sur la carte. Le microcontrôleur est relié d'une part à la chaîne d'émission; celle-ci présente un oscillateur 2, un modulateur 3 recevant les signaux fournis par l'oscillateur, et un étage de puissance 4 assurant l'amplification des signaux modulés fournis par le modulateur. Le microcontrôleur, comme représenté sur la figure par une flèche, pilote le modulateur 3 en fonction des données à transmettre vers la carte.

Le microcontrôleur est relié d'autre part à la chaîne de réception; celle-ci comprend un filtre passe-bande 8 pour filtrer les signaux provenant de l'antenne 7, des moyens 9 de détection et d'amplification du signal filtré, et des moyens 10 de démodulation du signal amplifié. Ces moyens de démodulation transmettent vers le microcontrôleur 1 les données lues sur la carte.

La carte présente aussi un élément de couplage, typiquement une bobine 11, aux bornes de laquelle est monté en parallèle un condensateur d'accord 12. Le signal aux bornes de la bobine est d'une part redressé par une diode 13. Le signal redressé est fourni aux moyens 14 d'alimentation de la carte; on peut y prévoir une stabilisation ou une limitation du signal reçu pour permettre l'alimentation du circuit intégré 15. Celui-ci comprend typiquement une mémoire RAM non-volatile, gérée par une logique câblée ou un microcontrôleur avec la mémoire associée.

Par ailleurs, un montage série d'un interrupteur 19 et d'une résistance 18 est relié aux bornes de la bobine 11. L'interrupteur 19 est commandé par un modulateur 17, pour la transmission dans le sens carte - lecteur, comme expliqué ci-dessous. Est en outre relié aux bornes de la bobine un circuit 16 d'extraction de l'horloge transmise par le lecteur, et de lecture des données transmises par le lecteur vers la carte. Le circuit intégré 15 est alimenté par les moyens 14, reçoit les signaux d'horloge et de données fournies par le circuit 16, et pilote le modulateur 17.

Le fonctionnement du dispositif de la figure 1 est le suivant. Pour communiquer avec la carte, le lecteur émet en permanence un signal de radiofréquence généré par l'oscillateur 2, modulé en amplitude pendant la transmission " lecteur vers carte " par le modulateur 3 et amplifié par l'étage de puissance 4 ; pendant la transmission " carte vers lecteur " le signal n'est pas modulé.

Le circuit intégré de la carte 15 est alimenté par le signal radiofréquence capté par la bobine 11, redressé par la diode 13 et stabilisé et éventuellement limité par le bloc 14. Le signal est présent en permanence, pendant la transmission dans un sens comme dans l'autre.

Le même signal radiofréquence induit dans la bobine 11 est envoyé au bloc 16 qui d'une part extrait l'horloge pour la logique de la carte et d'autre part détecte la modulation avec les données transmises par le lecteur.

La transmission des données de la carte vers le lecteur est effectuée par "modulation de charge" : le circuit accordé 11-12 est amorti par la résistance 18 au rythme des données, ou d'une sous-porteuse modulée avec les données, par fermeture de l'interrupteur 19 commandé par le bloc modulateur 17.

Les variations d'impédance du circuit accordé de la carte se traduisent par des variations d'amplitude dans le point "A" du lecteur, i.e. aux bornes du circuit d'accord de la bobine. En effet, l'impédance du circuit accordé du lecteur 5, 6 et 7 va varier aussi grâce au couplage mutuel inductif entre les bobines de la carte et du lecteur.

Le signal de réception constitué par une très faible modulation d'amplitude du signal fort de porteuse au point "A" est d'abord filtré par le filtre passe-bande 8 pour éliminer les éventuels signaux parasites captés par l'antenne 7 ; le signal filtré est fourni au bloc 9 qui détecte la modulation d'amplitude du signal et extrait et amplifie le signal de réception qui est démodulé par le bloc 10 ; les données de réception sont envoyées au bloc 1 qui est le microcontrôleur maître, gestionnaire du tout le système.

Est décrit en référence à la figure 1 une modulation de charge grâce à la fermeture de l'interrupteur 19. On pourrait aussi utiliser aussi une "modulation de charge capacitive"; on prévoit dans ce cas une capacité à la place de la résistance 18. La modulation consiste à un léger désaccord commandé par la modulation ; l'effet est le même pour la tension résultante dans le point "A" du lecteur.

Dans le montage de la figure 1, pendant la transmission " carte-lecteur " le signal de radiofréquence à l'entrée du récepteur du lecteur, dans le point " A", est essentiellement la porteuse, modulée en amplitude par le signal de réception avec un indice très réduit, qui varie entre 0,01 et 1%, déterminé par la distance entre carte et lecteur.

Comme expliqué plus haut, le nouveau problème que résout l'invention est celui du contrôle de la puissance transférée dans la bobine 11 de la carte. De fait, cette puissance peut être trop importante pour le circuit de la carte. Pour contrôler cette puissance, l'invention propose de mesurer la puissance réfléchie par la bobine, autrement dit la désadaptation induite par le couplage inductif de la bobine d'une carte sur la bobine du lecteur.

La figure 2 montre un schéma synoptique d'un lecteur selon l'invention; on a porté à la figure 2 les éléments du lecteur, à savoir le microcontrôleur 1 qui gère le lecteur, une antenne 26, une chaîne d'émission 25 qui fournit un signal oscillant à l'antenne; l'antenne 26 est une antenne accordée ou adapté. On prévoit selon l'invention des moyens de mesure 27 de la désadaptation de l'antenne; ces moyens permettent de détecter la présence de l'antenne d'une carte, ou plus exactement, permettent de détecter le désaccord que provoque dans l'antenne du lecteur le couplage inductif de l'antenne de la carte avec l'antenne du lecteur. Le lecteur présente en outre des moyens de réglage 28 de la puissance du signal oscillant fourni à l'antenne, en fonction de la désadaptation détectée.

Le fonctionnement du lecteur de l'invention est le suivant. En l'absence de carte, l'antenne est adaptée, et la puissance du signal oscillant fourni à l'antenne est la puissance nominale.

Si une carte entre dans le champ du lecteur, un couplage inductif s'effectue entre l'antenne de la carte et l'antenne du lecteur; ceci permet comme expliqué plus haut le transfert d'énergie vers la carte. Ce couplage inductif modifie l'adaptation de l'antenne, et se traduit par une variation de l'impédance de l'antenne, ou par une variation de la puissance réfléchie par l'antenne. Cette désadaptation de l'antenne du lecteur présente un valeur moyenne qui est fonction de la distance entre l'antenne du lecteur et l'antenne de la carte, et qui est aussi fonction du couplage entre l'antenne du lecteur et l'antenne de la carte.

Cette désadaptation croît avec le couplage inductif entre l'antenne de la carte et l'antenne du lecteur. Elle fournit donc indirectement une mesure de la puissance reçue par la carte, ou une mesure de l'intensité du champ reçu par la carte.

La désadaptation de l'antenne du lecteur varie aussi en fonction de la modulation par la carte. Dans la plupart des applications, la carte doit rester accordée pour être alimentée, et ne provoque donc qu'une faible modulation du champ, avec une profondeur de modulation de l'ordre de 8%. Les variations de la désadaptation de l'antenne, pour entre les phases de réception depuis la carte, et les phase d'émission vers la carte, sont de l'ordre de 10%.

A titre de comparaison, pour un système en boucle ouverte sans un contrôle de la puissance comme celui de l'invention, la puissance reçue par la carte peut varier en puissance et atteindre des valeurs une centaine de fois plus importante que la puissance minimale nécessaire au fonctionnement de la carte. La désadaptation provoquée par les déplacements de la carte dans le champ du lecteur varie donc de façon beaucoup plus importante que la désadaptation provoquée par la modulation par la carte.

En outre, dans le temps, les variations de la désadaptation provoquées par la modulation par la carte permettent des transmissions à des vitesses de l'ordre de 100 kbit/s. Cette vitesse de variation du fait des modulations est à comparer avec la vitesse des variations provoquées par le déplacement mécanique de la carte par rapport au lecteur ; en pratique, les modulations provoquent des variations plus rapides de plusieurs ordres de grandeur que les variations provoquées par les déplacements de la carte par rapport au lecteur.

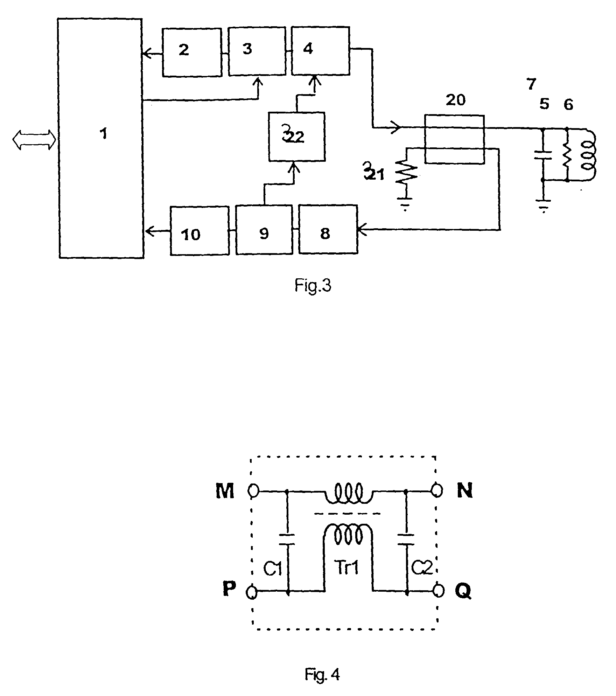

Les moyens de mesure 27 mesurent la désadaptation de l'antenne, par exemple par mesure de l'impédance de l'antenne, ou par mesure de la puissance réfléchie comme dans le mode de réalisation de la figure 3.

Dans une application de lecture de cartes sans contact, dans un premier mode de réalisation, la mesure peut simplement être une mesure pendant la période de transmission dans le sens lecteur vers carte; pendant cette période, la carte ne transmet pas et les variations de l'adaptation de l'antenne du lecteur sont simplement provoquées par la présence de la carte.

Dans un autre mode de réalisation, on peut procéder à une mesure de la valeur moyenne de la désadaptation de l'antenne ; comme expliqué plus haut, la valeur moyenne de la désadaptation dépend essentiellement de la puissance transférée par le lecteur à la carte. La modulation par la carte induit des variations d'adaptation qui se traduisent par des variations faibles de l'amplitude du signal aux bornes de l'antenne 26. Ces variations n'empêchent pas une mesure de la désadaptation moyenne induite par la carte, qui est représentative de la puissance transférée par le lecteur à la carte.

Dans l'un ou l'autre de ces modes de réalisation, en fonction des résultats de la mesure, les moyens de réglage 28 font varier la puissance rayonnée par l'antenne du lecteur.

Dans une application de cartes sans contact, on peut mesurer ou calculer la désadaptation de l'antenne du lecteur induite par une carte sans contact recevant la puissance maximale autorisée; les moyens de réglage peuvent alors faire diminuer la puissance rayonnée dès que la désadaptation est plus importante que cette désadaptation maximale mesurée ou calculée. On assure de la sorte que la puissance transférée à la carte par le lecteur reste inférieure à la puissance maximale supportée par la carte.

On peut employer tout type de moyen de réglage, ou de procédé de réglage connu en soi. On peut simplement faire baisser la puissance rayonnée lorsque la désadaptation est trop importante. On peut aussi procéder à un réglage de la puissance de sorte à obtenir une désadaptation donnée dès lors qu'une carte est détectée; une telle démarche permet de régler la puissance moyenne reçue par une carte, et permet notamment d'augmenter la puissance pour une carte située loin du lecteur. Dans tous les cas, la vitesse de déplacement mécanique de la carte est faible devant les constantes de temps des moyens de réglage de la puissance du lecteur ; on assure ainsi la protection de la carte, ou encore l'augmentation de la portée de lecture par augmentation de la puissance.

On a enfin porté à la figure 2 la chaîne de réception 29 du lecteur; celle-ci peut fonctionner comme celle de la figure 1, ou bien comme dans le cas de la figure 3, à partir des résultats fournis par les moyens de mesure.

La figure 3 montre une représentation graphique d'un lecteur selon l'invention.

Le lecteur de la figure 3 est sensiblement identique à celui de la figure 1. Toutefois, il présente aux bornes de l'antenne un coupleur directif 30; ce coupleur directif laisse passer vers l'antenne les signaux provenant de la chaîne d'émission; la chaîne de réception est reliée non plus directement à l'antenne, mais à la sortie d'onde réfléchie du coupleur. La sortie d'onde transmise du coupleur est reliée à la masse par l'intermédiaire d'une résistance 31. Le signal à la sortie d'onde réfléchie, comme expliqué en référence à la figure 4, est représentatif de l'énergie réfléchie par l'antenne, c'est à dire de la désadaptation de l'antenne induite par la présence de la carte. La figure montre en outre les moyens 32 de réglage de la puissance; dans l'exemple, ces moyens reçoivent un signal provenant des moyens 9 de détection du signal. Les moyens de détection 9 assurent d'une part la mesure de la valeur instantanée de la puissance réfléchie : comme expliqué à la figure 1, cette mesure permet de connaître les données transmises par la carte vers le lecteur; ils assurent d'autre part la mesure de la valeur moyenne de cette puissance réfléchie, ou la mesure de la puissance réfléchie lorsque la carte ne module pas le signal radiofréquence.

Le fonctionnement du dispositif de la figure 3 est le suivant. Du point de vue de l'émission, hormis la régulation de puissance, rien ne change par rapport au montage de la figure 1. En réception, la chaîne de réception reçoit de la part du coupleur un signal représentatif de la désadaptation de l'antenne. Comme dans le cas de la figure 1, il est possible de rechercher une modulation de faible amplitude sur ce signal pour détecter des données envoyées par une carte sans contact. De ce point de vue, la détection reste possible.

Il est en outre possible de mesurer la désadaptation pour faire varier si besoin est la puissance émise, comme expliqué en référence à la figure 2. Ainsi, on peut réduire de la puissance d'émission quand le signal moyen réfléchi atteint une valeur importante, donc un signal trop puissant dans l'antenne 11 de la carte.

La figure 4 montre une représentation schématique d'un coupleur directif pouvant être utilisé pour mesurer la désadaptation de l'antenne. Elle montre la structure en éléments concentrés du coupleur directif.

Le coupleur présente quatre portes M, N, P et Q. Entre les portes M et P est branché un condensateur C1. Entre les portes N et Q est branché un condensateur C2. Le circuit primaire d'un transformateur TR1 est branché entre les bornes M et N, et le circuit secondaire du transformateur est couplé entre les bornes P et Q.

Si les portes M, N, P et Q sont adaptées sur une impédance Z0 et les valeurs des éléments C1, C2 et le rapport du transformateur Tr1 est conforme aux relations données dans la littérature, alors l'ensemble présente des propriétés de directivité :
- le signal à la porte P est proportionnel à l'énergie transférée de la porte M vers la porte N ; le transfert inverse, de N vers M ne génère aucun signal à la porte P ;
- le signal à la porte Q est proportionnel à l'énergie transférée de la porte N vers la porte M ; le transfert inverse, de M vers N ne génère aucun signal à la porte Q ;

Par l'utilisation d'un tel dispositif dans un lecteur on peut récupérer d'une façon nette le signal "réfléchi" par la carte: le signal très fort d'émission est atténué par la directivité du coupleur. L'antenne du lecteur est normalement adaptée et accordée pour présenter une impédance purement résistive et de valeur égale à l'impédance caractéristique d'un câble coaxial (50 ou 75 ohms), souvent utilisé pour déporter l'antenne ; l'accord et l'adaptation sont réalisés en absence de la carte. Si cette condition est remplie, la tension fournie par le coupleur à l'entrée 8 du récepteur est idéalement nulle ; une tension très faible est provoquée par les tolérances des composants du coupleur et de l'antenne.

Quand une carte à puces sans contact s'approche du lecteur, le couplage mutuel entre les deux circuits accordés provoque une variation de l'impédance équivalente de l'antenne du lecteur, donc une désadaptation ; la condition d'équilibre du coupleur n'est plus remplie et un signal de radiofréquence sera présent à l'entrée de réception. La valeur moyenne du cet signal est inversement proportionnelle à la distance carte - lecteur ; le bloc 22 en fonction de la composante continue du signal de réception, commande le gain de l'étage de puissance 4 de la chaîne d'émission; par exemple, si la composante continue dépasse une valeur limite, on transmet une commande de réduction de gain à l'étage de puissance. Par ce contrôle de puissance la carte est protégée contre les surcharges.

L'utilisation du coupleur directif dans l'ensemble d'un lecteur offre aussi d'autres avantages.

En absence d'une carte présentée au lecteur, la valeur de la tension continue récupérée par la chaîne de réception indique la désadaptation de l'antenne. En mesurant cette tension avec un simple voltmètre on peut adapter l'antenne sur le terrain et diminuer ainsi toutes les influences des masses métalliques voisines d'une façon extrêmement simple ; il suffit de régler le condensateur d'accord 6 pour la valeur minimale de tension réfléchie. On évite ainsi, pour les applications critiques, l'utilisation des appareils de mesure dédiés.

Un autre fonction utile offerte est de donner une alarme pour les pannes les plus fréquentes des systèmes de lecture sans contact : l'antenne désaccordée ou câble d'antenne défectueux ; l'alarme sera prise en compte et transmise si le seuil de réduction de puissance est trop longtemps indiqué, sans avoir de dialogue avec une cane. Il suffit pour cela de transmettre au contrôleur 1 du lecteur un signal représentatif de la réduction de puissance; le contrôleur peut alors mesurer la durée de la réduction de puissance en l'absence de carte, à l'aide d'un simple compteur.

Le coût de mise en oeuvre de l'invention est réduit. Il faut remarquer que le transformateur que l'on peut utiliser pour le coupleur figure déjà dans les catalogues des plusieurs fabricants des composants montés en surface. L'intégration sur un composant unique du transformateur avec les capacités et la résistance d'équilibrage est avantageusement envisageable pour des volumes importants de fabrication.

Le système de protection selon l'invention permet au lecteur de cane d'estimer de façon totalement autonome le transfert d'énergie vers la cane et de réduire immédiatement la puissance quand le couplage est trop important. La carte n'a aucune initiative ou action à exercer; on évite d'une part la destruction des cartes avant qu'un échange n'ait pu avoir lieu; on évite d'autre part d'utiliser pour le réglage de la puissance les capacité de transmission entre le lecteur et la carte.

Bien entendu, la présente invention n'est pas limitée aux exemples et modes de réalisation décrits et représentés, mais elle est susceptible de nombreuses variantes accessibles à l'homme de l'art. Elle n'est pas limité à une application de lecture de cartes à circuits intégrés, mais plus généralement à tout dispositif de lecture sans contact employant un couplage inductif, comme par exemple les étiquettes interrogeables à distances, qui sont en fait aussi des "cartes" lues sans contact.

Il est clair que l'invention fonctionne aussi si l'antenne n'est pas adaptée en l'absence de carte. En fait, il ne s'agit là que d'une adaptation particulière, pour laquelle la puissance réfléchie est non nulle. La mesure de la variation de l'adaptation permet de contrôler aussi la puissance du lecteur.

Il est clair encore que le terme de microcontrôleur doit s'entendre comme terme générique pour désigner la partie de commande du lecteur, qui peut physiquement être réalisée par d'autres moyens qu'un microcontrôleur.

## Revendications

1. Un lecteur de carte sans contact, présentant une antenne adaptée (26), une chaîne d'émission (25) envoyant un signal oscillant vers l'antenne, des moyens (27) de mesure de la désadaptation de l'antenne, et des moyens (28) de réglage de la puissance du signal envoyé par la chaîne d'émission en fonction de la désadaptation mesurée.

2. Le lecteur selon la revendication 1, caractérisé en ce que les moyens de mesure (27) mesurent la désadaptation moyenne de l'antenne.

3. Le lecteur selon la revendication 1 ou 2, caractérisé en ce que les moyens de mesure comprennent un coupleur directionnel (30).

4. Le lecteur selon la revendication 1, 2 ou 3, caractérisé en ce que les moyens de réglage règlent la puissance du signal de sorte à ce que la désadaptation de l'antenne reste inférieure à une valeur seuil.

5. Le lecteur selon l'une des revendications 1 à 4, caractérisé en ce qu'il comprend en outre une chaîne de réception (29) recevant un signal de l'antenne et détectant les variations instantanées du signal reçu.

6. Le lecteur selon la revendication 5, caractérisé en ce qu'il comprend un contrôleur (1), le contrôleur générant une alarme lorsque les moyens de mesure (27) mesurent une désadaptation et que la chaîne de réception ne détecte pas de variations instantanées du signal reçu pendant une durée prédéterminée.

7. Un procédé de réglage de la puissance rayonnée par un lecteur de carte sans contact, présentant une antenne adaptée (26), comprenant :
- la mesure de la désadaptation de l'antenne, et
- le réglage de la puissance rayonnée par l'antenne en fonction de la désadaptation mesurée.

8. Le procédé selon la revendication 7, caractérisé en ce que l'étape de mesure s'effectue à l'aide d'un coupleur directionnel.

9. Le procédé selon la revendication 7 ou 8, caractérisé en ce que l'étape de réglage comprend :
- la diminution de la puissance rayonnée lorsque la désadaptation mesurée est supérieure à une valeur prédéterminée.

10. Le procédé selon la revendication 7, 8 ou 9, caractérisé par une étape de génération d'une alarme lorsque la désadaptation mesurée est supérieure à une valeur prédéterminée et que le lecteur ne détecte pas de carte pendant une durée prédéterminée.
